Europäisches Patentamt

**European Patent Office**

**Office européen des brevets**

(11) Publication number: **0 168 617**
A2

# EUROPEAN PATENT APPLICATION

(21) Application number: **85106970.8**

(22) Date of filing: **05.06.85**

(51) Int. Cl.⁴: **B 29 C 59/02,** B 29 C 59/04

(30) Priority: **19.07.84 US 632477**

(43) Date of publication of application: **22.01.86**
**Bulletin 86/4**

(84) Designated Contracting States: **DE FR GB IT**

(71) Applicant: **HALLMARK CARDS, INCORPORATED,**
**2501 McGee Traffic Way, Kansas City**
**Missouri 64141 (US)**

(72) Inventor: **Watkins, John Bruce, 16805 Erin Lane,**
**Independence Missouri 64055 (US)**

(74) Representative: **Hoeger, Stellrecht & Partner,**
**Uhlandstrasse 14c, D-7000 Stuttgart 1 (DE)**

(54) **Replication of surface characteristics.**

(57) The present invention relates to a method for replicating surface characteristics by bringing a thermoplastic material at a temperature above its softening point into contact with the surface of an imaged tool on which desired surface characteristics are present. Fluid pressure is applied to the softened thermoplastic material while the material is in contact with the imaged tool. The thermoplastic material is then cooled to a temperature below its softening point and the cooled plastic carrying the replicated surface characteristics is separated from the tool.

- 1 -

REPLICATION OF SURFACE CHARACTERISTICS

This invention relates to replicating surface characteristics.

Background

Reproduction of various surface characteristics is a common practice. Thus, for example, many duplicates are made of surface deformation images such as holograms, diffraction gratings, video discs, phonographic records and the like. Many duplicates are also made of very smooth surfaces for applications such as mirrors. In either case, both the quality of the replications and the speed of replicating is often very important. Reproduction of surface characteristics, hereinafter referred to as an "image", has been accomplished by processes which involve transferring the image from a master to a film of thermoplastic material using a combination of thermal energy and mechanical pressure. In such duplicating processes, the image to be duplicated is provided on a tool which is made from the master by known means such as engraving or photomechanical reproduction. The imaged tool is brought into contact with a film of thermoplastic material and passed through pressure rollers. The imaged tool is heated to a desired stamping temperature, which in turn softens the thermoplastic film so that it is receptive to the image present on the imaged tool when the two are pressed together by passing through the nip of pressure rollers. The imaged tool and the thermoplastic film are then cooled to a temperature below the stamping temperature prior to separation to insure transfer of a good image.

Known image transfer processes of this type suffer a number of disadvantages. Thus, the speed of replicating with known processes of this type is inherently slower than desired because of the time required to cool the imaged tool and thermoplastic film. Also, the quality of the replications is not always as good as desired. Wedge effects caused by introducing the thermoplastic film and imaged tool into the nip of pressure rollers produce image displacements. At times the pressure rollers cause lateral movement of the thermoplastic film which smears the image being reproduced. Also, gauge or thickness variations in the thermoplastic film often result in smearing or distortion of the replicated image when the film is passed between pressure rollers. Surface defects can also occur in the areas of low film gauge where pressure applied by the pressure rollers is not uniform. Further, the pressure rollers often cause wrinkling or breakage of thin or low gauge films of plastic material, resulting in damaged product and delays in manufacturing. The pressure rollers exert substantial force on the plastic film, which force is transmitted to the imaged tool, causing deformation and/or wear of the imaged tool. The pressure exerted by the rollers causes the plastic web thereby produced to be stressed and "oriented", resulting in warpage of the web if the ambient temperature changes, particularly if the web is thin.

Objects Of The Invention

It is therefore a principal object of this invention to provide a new and improved method for replicating surface characteristics.

It is a further object of this invention to provide a replicating process which can be carried out at high speeds.

It is still another object of this invention to provide a replicating process which produces a web or film of a thermoplastic material with minimal orientation or stress and carrying high quality image replications.

A further object of this invention is to provide a process for producing surface replicates on thin films or webs of thermoplastic material.

It is a further object of this invention to provide a replicating process in which imaged tool life is maximized.

Summary Of This Invention

The present invention relates to a method for replicating surface characteristics by bringing a thermoplastic material maintained at a temperature above its softening point into contact with the surface of an imaged tool on which desired surface characteristics are present. Fluid pressure is applied to the softened thermoplastic material while the material is in contact with the imaged tool. The thermoplastic material is then cooled to a temperature below its softening point and the cooled plastic carrying the replicated surface characteristics is separated from the tool.

Description Of The Drawings

Figure 1 is a schematic flow diagram illustrating a suitable arrangement of apparatus for producing image replications in accordance with one preferred embodiment of the present invention.

Figure 2 is a view similar to Figure 1 showing another embodiment of apparatus for producing replications in accordance with the invention.

Figure 3 is a schematic flow diagram illustrating a second form of a device for applying fluid pressure in producing image replications in accordance with the invention.

Figure 4 is an enlarged diagrammatic view showing the paths of fluid directed onto and reflected from a film of thermoplastic material on an imaged tool in accordance with one embodiment of the invention.

Figure 5 is a schematic view similar to Figure 1 showing a further embodiment of a resilient means for applying fluid pressure in producing image replications in accordance with the invention.

Figure 6 is a fragmentary schematic view illustrating the assumed configuration of the resilient fluid pressure means of Figure 5 in contact with an imaged tool.

Description Of Preferred Embodiments

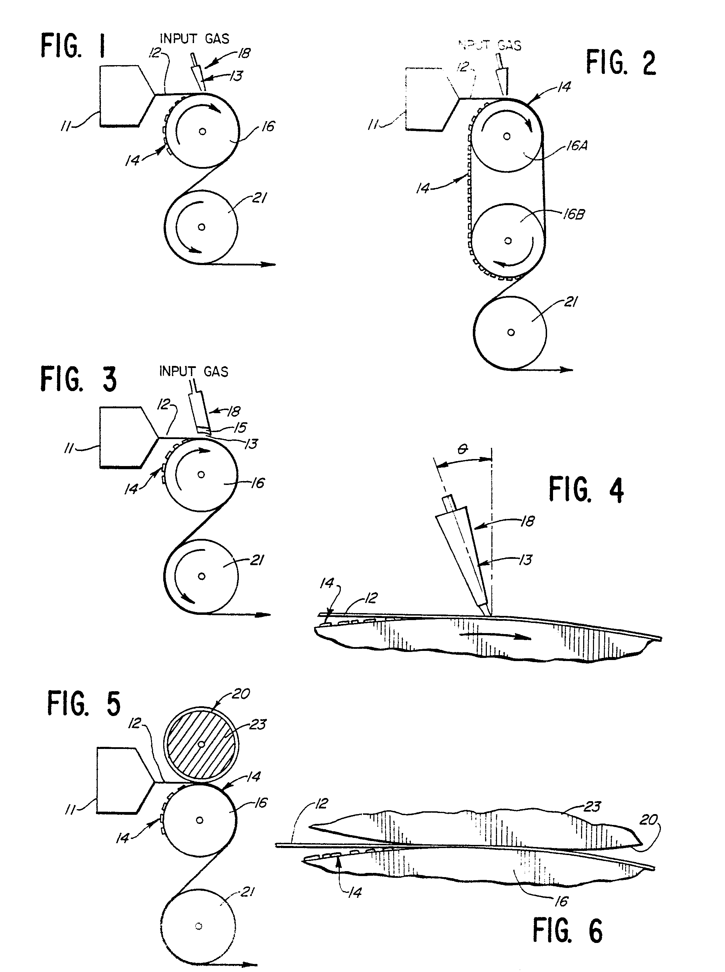

The new and improved replicating process of this invention and the advantages thereof will be further described with reference to the drawings. Referring to Figure 1, which is a schematic flow diagram of the new method, a thermoplastic material 12 is extruded at a temperature above its softening point from an extrusion die 11. A large variety of thermoplastic materials which are rendered soft and moldable by heat can be used. Representative of suitable materials are polypropylenes, polyethylenes, polycarbonates, polyvinylchlorides, polyesters, polystyrenes, acrylics and the like. Preferred thermoplastic materials are those that soften and become moldable at temperatures slightly above room temperature For certain applications, it is preferred that the plastic be transparent, or at least translucent, for viewing the image through the plastic. Preferred illustrative thermoplastics include polypropylenes and polyesters.

The extruder 11 can be a conventional extruding die for extruding plastic material. The softened thermoplastic 12 is extruded from extruder 11 onto an imaged tool 14 which can be secured to a rotating cylinder 16. Alternatively, the imaged tool can take the form of a continuous belt 14 which is suspended on and between two parallel rotating cylinders 16A and 16B, as shown in Figure 2. Preferably, depending upon the nature of the image to be reproduced and the intended use of the replicates, the thermoplastic material is extruded onto the imaged tool at a rate to provide, when cooled, a film of plastic having a thickness of from about 1/4 to 20 mils, and most preferably about 1/2 to 2 mils.

The image to be duplicated can be formed on the imaged tool 14 by any suitable technique, such as, but not restricted to, electroforming, casting and the like. The imaged tool 14 is preferably formed of a material which retains its integrity under temperatures high enough to soften or melt the plastic used in this process, is hard enough to retain the image after multiple uses, conducts heat sufficiently to help cool the melted plastic, and can be formed into a cylindrical shape as in Figure 1, or suspended on and between two parallel rotating cylinders as in Figure 2. A material which satisfies these criteria particularly well, particularly for placement on a rotatable cylinder, is nickel. Other suitable materials include copper, silicones and epoxies.

The cylinder 16 carrying the imaged tool 14 on its exterior surface rotates as the softened plastic 12 is extruded thereon. The rotating cylinder 16 is preferably of the known water-cooled type in which water is passed through the interior thereof. The cylinder is cooled in this manner to a temperature below the softening temperature (freezing temperature) of the plastic. As the cylinder rotates, fluid pressure is applied to the thermoplastic material causing it to conform to the surface of the imaged tool, with the image thereon being faithfully transferred to the thermoplastic material in its frozen state.

According to one preferred embodiment, fluid pressure is applied from any suitable device 18 capable of directing a stream of gas onto the film of thermoplastic material which is spread on the imaged tool surface. This gas stream or gas curtain should be such as to prevent air from being trapped between the imaged tool and the thermoplastic film to which the image is to be transferred. Thus, the gas stream performs an "ironing" effect and preferably is directed over the entire width of the thermoplastic film at temperatures below the freezing temperature of the plastic material. The gas is directed onto the thermoplastic material with sufficient force to "iron" it against the imaged tool and to force it into intimate contact therewith, the minimum amount of such pressure being a function of the viscosity of the plastic material and the thickness of the plastic film. Ordinarily, such pressures fall in a range between approximately 0.1 and 10 grams per centimeter.

The fluid pressure device 18 can be any suitable device which is capable of forming a gas curtain over the surface of the thermoplastic passing therebelow. Examples of suitable devices are air knives, and air pressure zones created through the use of porous materials through which air or other gas is directed. Thus, referring to Figure 1, air or other gas 13 is expelled through the narrow aperture of an air knife 18 onto the softened thermoplastic web 12, at substantially the same time and location as the softened thermoplastic web 12 contacts the imaged tool 14. In Figure 3, the gas 13 is expelled from a gas-directing device 18 through a porous material 15, which is positioned immediately above a portion of the imaged tool 14, including that point at which the softened thermoplastic web 12 contacts the imaged tool 14.

With the pressure applying device 18 arranged as in Figure 3, the gas is directed onto the thermoplastic material in a plane substantially normal to the surface of the imaged tool. With the pressure applying device as illustrated in Figure 1 in which the gas is directed through a relatively small slot or aperture, the angle of incidence of the gas against the thermoplastic can be varied. One advantage to having the gas strike the plastic at an angle somewhat less than 90° to the imaged tool as shown in Figure 4 is that less gas will be deflected from the thermoplastic toward the extrusion die, thereby lessening undesired cooling of the extrusion die and premature cooling of the web being extruded.

In lieu of a gas-directing device as exemplified in Figures 1 and 3, there can be used any device which functions to exert fluid pressure on the surface of the thermoplastic film when it comes into contact with the imaged tool. The fluid pressure must be sufficient to "iron" the plastic against the imaged tool and to force the thermoplastic film into intimate contact therewith. Free-flowing or flexibly confined fluid pressure can be utilized. Thus, for example, the fluid pressure can be exerted by free-flowing gas or liquid which is not confined in a container or by gas or liquid confined in a resilient container such as, for example, an elastomeric bag. Preferably, the gas or liquid within the resilient container is at a relatively low temperature below the softening temperature of the thermoplastic material so that heat is conducted from the thermoplastic film causing it to become frozen. Cooling of the confined gas or liquid can be accomplished by any suitable means. While the use of such a container to confine a gas or liquid creates a certain limited amount of friction between the container and the thermoplastic film, such friction can be useful, for example, to polish one side of the thermoplastic film. Figure 5 shows in schematic form a fluid container designated with the numeral 20 which can be, for example, a resilient bag made of an elastomeric material filled with a liquid or gas designated by the numeral 23. Figure 6 depicts the assumed configuration of such a resilient fluid container 20 at the point at which it contacts the thermoplastic 12 in contact with the imaged tool 14. The resilient fluid container bag 20 yieldably deforms to the imaged surface carried by tool 14, unlike the non-yielding rigid mechanical pressure exerted by mechanical nip rolls. The degree of pressure exerted by the resilient liquid or gas filled container is such as to force the thermoplastic material into intimate contact with the surface of the imaged tool.

In the event that the imaged tool 14 or the cylinder 16 on which it is mounted is not sufficiently heat conductive to adequately cool the thermoplastic, the imaged tool can be cooled as is known by directing against its exposed side a steady or periodic stream of a cool gas or liquid, or by otherwise removing heat by known means from the imaged tool during its use as described herein.

The softened plastic 12 extruded from extruder 11 flows onto the imaged tool and is molded in conformance therewith. Water passing through the cylinder 16, or other tool-cooling device, and the fluid from gas-directing device 18 or fluid container 20 both serve to cool the softened thermoplastic to its frozen (normal unsoftened) state whereby the image from the imaged tool is transferred to the thermoplastic film. The frozen film of thermoplastic is then removed from the imaged tool and rotating cylinder as a continuous web. Idler roll 21 guides the imaged thermoplastic web which can then be processed as desired. Idler roll 21 can also serve to conduct residual heat away from the thermoplastic web; for that purpose, idler roll 21 can be cooled in a manner similar to that by which the imaged tool 14 can be cooled. The replicated images on the web can be enhanced by metalizing the image surface such as with aluminum as is known in the art. Protective coatings such as varnish can also be applied to the finished web, if desired.

A specific example of image replication by the process of the present invention is as follows:

A master copy of a diffraction grating, having details in the submicron range, is copied via nickel electroforming methods. The electroformed copy of the diffraction grating is very faithful and no quality of surface detail is lost in this operation. The nickel electroform sheet is removed from contact with the diffraction grating surface and then is attached to a cylinder surface for contact with a thermoplastic material.

For flexibility and ease of attachment, the nickel electroform 14 is usually in the range of 3 to 15 mils in thickness. It is attached to a rotatable cylinder 16 by either mechanical methods or adhesives. The cylinder is then positioned so that it rotates in close proximity to an extrusion sheet die 11 of the same working width. The sheet die is fed with a thermoplastic resin mixture under pressure such that the resin film 12 extrudes onto the imaged surface of the nickel-covered cylinder. Typically, the resin is a polypropylene or polyester resin extruded in the temperature range of 370 to 470° F. with a sheet die pressure of 900 to 1800 psi.

For economic reasons described below, the film thickness should be in the range of 0.5 to 2 mils. However, this process is flexible and will copy images very well above and below this range. The extruded thermoplastic film 12, from the sheet die 11, passes below an air knife 18 at the same time that it comes in contact with the imaged tool 14 attached to the cylinder 16. The frictionless air pressure curtain presses the film onto the imaged tool and irons out the air which could otherwise be trapped between the imaged tool and the thermoplastic film. The surface speed of the cylinder is usually in the range of 40 feet per minute. The air knife is held above the cylinder a distance of 20 mils and operated with an internal air pressure of 20 to 40 psi. Typically the slit opening of the air knife is set at 10 mils prior to pressurization.

The plastic web then continues around the imaged tool 14 attached to the cylinder 16 for approximately 180 degrees and is reverse wrapped onto a second cylinder 21 which conducts residual heat away from the web. Secondary processing of the imaged plastic web such as trimming and rewinding then takes place.

The present image replicating process affords numerous practical advantages. The air (or other confined or unconfined gas or liquid) which is directed onto the thermoplastic film, as the image is being transferred to the softened plastic, exerts an "ironing" effect on the plastic so as to exclude air bubbles between the plastic film and image master. This results in superior quality replicates and is particularly advantageous when the image to be reproduced involves very fine details, such as holograms or diffraction grating patterns. The gas curtain exerts only substantially normal (perpendicular) forces on the film surface which does not cause lateral movement from which smearing of the image could occur. Moreover, the gas curtain adjusts to gauge variations in the thickness of the plastic film, thus insuring good contact of the plastic with the image master. This adjustment is superior even to that provided by a flexible nip roll such as the one described in United States patent No. 3,756,760. Also, because the gas curtain or other pressure means described herein is "forgiving" and not rigid, when the mass of the softened plastic begins to shrink as it cools, the web can pull away from the image master, rather than being dragged laterally along the image master by the force of the shrinkage, thus avoiding damage to the replicated image which became fixed (frozen) almost instantaneously upon contact with the image master. This free shrinkage also keeps the plastic film from becoming stressed or "oriented", as generally happens with opposing nip rolls, which often results in warpage of the resulting web if the ambient temperature changes, particularly if the web is thin.

The heat transfer qualities of the gas curtain or other fluid pressure means allow greater line speeds while adequately cooling the imaged plastic film. The gas curtain directed onto the rotating cylinder at a substantially perpendicular orientation produces very little friction, thus permitting very thin gauge imaged film to be produced without a likelihood of web wrinkling or breakage. With a thin gauge plastic film, the image can be viewed satisfactorily from the non-image side of the web without the necessity of polishing that side. This property is desired because some product applications require viewing the image from the back side of the imaged plastic film. Thin gauge films also afford greater economy since more imaged film can be produced from a given amount of plastic and more square feet of imaged film can be accommodated on each production roll. Metalization of said films, and like conversion processes, are more cost effective with large square footage production rolls because of the lesser number of interruptions to such costly processes.

The use of a gas curtain or other equivalent fluid pressure means rather than opposing mechanical pressure nip rolls greatly reduces the pressure applied to the plastic film, and many plastic films are lubricants in their liquid states. For both of these reasons, the pressure applied to the imaged tool is negligible, resulting in a negligible amount of deformation or wear of the imaged tool. Thus, unless the plastic and the imaged tool are made of chemically reactant materials, the imaged tool has a long, useful life.

The gas curtain or other fluid pressure means can be applied to rotating cylinders with circumferential diameter variations, without shear stress, which results from differential surface velocities inherent in the use of opposing nip rolls with circumferential diameter variations, being applied to the imaged plastic web. Such shear stress can distort or smear the replicated image. On the contrary, the application of fluid pressure according to this invention enables the production of imaged film with configurations other than planar.

Those modifications and equivalents which fall within the spirit of the invention are to be considered a part thereof.

WHAT IS CLAIMED IS:

1.   A process for replicating surface characteristics
which comprises:

    (a)   bringing a thermoplastic material
at a temperature above its softening
point into contact with the surface
of a tool on which desired surface
characteristics are present,

    (b)   applying fluid pressure to the side
of said thermoplastic material which
is not in contact with the imaged
tool while such material is in contact
with said tool,

    (c)   cooling the thermoplastic material to
below its softening point, and

    (d)   separating from the tool the thermoplastic material carrying a replication
image from the tool.

2.   A process in accordance with claim 1 wherein in
step (b) a liquid is used to apply fluid pressure.

3.   A process in accordance with claim 1 wherein in
step (b) a gas is used to apply fluid pressure.

4.   A process in accordance with claim 3 wherein in
step (b) air is used to apply fluid pressure.

5.   A process in accordance with claim 3 wherein
the gas is brought into contact with a thermoplastic material
in a plane substantially normal to the film of thermoplastic
material.

6. A process in accordance with claim 3 wherein the gas is brought into contact with the thermoplastic material in a plane less than substantially normal to the film of thermoplastic material.

7. A process in accordance with claim 1 wherein in step (b) a gas or liquid confined within a flexible container is used to apply fluid pressure.

8. A process in accordance with claim 1 wherein the thermoplastic material is one which exhibits a softening point slightly above room temperature.

9. A process in accordance with claim 1 wherein the thermoplastic material is one which in its normal state is translucent.

10. A process in accordance with claim 1 wherein the thermoplastic material is one which in its normal state is transparent.

0168617

FIG. 1

INPUT GAS

FIG. 2

INPUT GAS

FIG. 3

INPUT GAS

FIG. 4

θ

FIG. 5

FIG. 6